# EUROPEAN PATENT SPECIFICATION

(11) **EP 2 123 479 B1**
(45) Date of publication and mention of the grant of the patent: **19.01.2011**
(21) Application number: 09159433.3
(22) Date of filing: 05.05.2009
(51) Int. Cl.: B60C 1/00

(54) **Tire with air barrier layer**
Reifen mit Luftgrenzschicht
Pneu avec couche pare-air

(30) Priority: 21.05.2008 US 54931 P
(43) Date of publication of application: 25.11.2009
(73) Proprietor: The Goodyear Tire & Rubber Company, Akron, OH 44316-0001 (US)
(72) Inventor: Majumdar, Ramendra Nath, Hudson, OH 44236 (US); Francik, William Paul, Bath, OH 44333 (US)
(74) Representative: Kutsch, Bernd

(56) References cited:
- EP-A- 0 706 878
- EP-A- 1 726 620
- WO-A-2007/070728
- WO-A-2007/111584
- WO-A-2008/051253

## Description

### Field of the Invention

The present invention relates to a pneumatic tire having an air barrier layer, particularly an integral pneumatic tire innerliner, for prevention, or retardation, of air permeation from its inner chamber to the atmosphere through the carcass of the tire. The innerliner preferably comprises an annular, cylindrical, hoop of a film having its ends overlapped and heat sealed together. The film comprises a continuous thermoplastic polymer phase which contains a dispersion therein of cured rubber domains, particularly cured low unsaturation rubber domains. In one embodiment, one surface of the film contains a thin bonding layer to aid in bonding the film to an unsaturated rubber-containing tire carcass. In one embodiment, the overlapping portion of the ends of the film have a thin rubber layer positioned therebetween.

### Background of the Invention

A pneumatic rubber tire is conventionally of a toroidal shape and comprised of a carcass with a cavity in which its closure is typically completed with a rigid rim onto which the tire is to be mounted.

The inner surface of a pneumatic tire, namely a surface of said cavity which is sometimes referred to as an "innerliner" is typically composed of an integral layer of an elastomeric composition intended to prevent, or retard, the permeation of air and moisture into the tire carcass from the aforesaid cavity.

Butyl rubber (including halobutyl rubber) has a relatively high air impermeability as well as a relatively high moisture impermeability and is often used as a major portion of the tire innerliner composition and can be in a form of butyl rubber or halobutyl rubber such as, for example, bromobutyl rubber. Butyl rubber, while containing a minor amount of units derived from a diene such as, for example isoprene, is not considered herein as being a diene-based rubber since it contains less than 10 percent, and usually less than 5 percent, of its content derived form a diene monomer and, therefore, sulfur vulcanizes at a much slower rate than diene-based elastomers which contain at least, for example, 30 percent of their elastomer content derived from diene monomers.

In practice, the butyl rubber (e.g. halobutyl rubber) is simply applied to a tire building drum as a circumferential rubber layer to form a tire innerliner and the ends of the layer are joined by stitching (e.g. simply pressing) together their overlapping ends on the tire building drum using a suitable hand held roller. The remainder of the tire assembly, or components, are then built onto the building drum over the initially applied butyl rubber tire innerliner layer. Such process is well known to those having skill in such art.

Historically, tire innerliners for air permeability resistance have also been proposed which are comprised of a composite of a thermoplastic resin which contains a dispersed cured rubber. For example see US-B- 6,359,071, US-B-6,376,598, US-B- 6,843,292, US-B- 6,861,470, US-B- 6,538,066, and EP-A- 0 706 878.

For this invention, it is proposed to replace or supplement the aforesaid butyl rubber based tire innerliner layer with a film of such composite in a form of an annular hoop having its ends overlapped and heat sealed together.

The film for such purpose comprises a continuous thermoplastic polymer phase which contains a dispersion of cured rubber domains, particularly comprising cured low unsaturation rubber domains.

In practice, one surface of the film composite may have a very thin non-tacky bonding layer thereon to aid in bonding the film to the rubber carcass of the tire since the film itself may have only a limited ability to adhere to the tire carcass rubber. By being non-tacky in nature, it is intended herein to mean that the bonding layer does not exhibit extensive building tack, particularly at room temperature (e.g. 23°C). The bonding layer aids in adhering the film to the tire carcass rubber by heat activation of the bonding layer during the curing of the tire assembly itself at an elevated temperature. Such bonding layer may therefore be referred to in this description as being a "rubber-bonding" layer in a sense that it promotes bonding the film composite to the rubber or the tire carcass.

For the film composite, the low unsaturation rubber domains comprise a rubbery brominated copolymer of isobutylene and p-methylstyrene. By low unsaturation it is meant that the rubber contains a low, or essentially non-existent, carbon-to-carbon double bond content. Representative of such rubber is EXXPRO™ from ExxonMobil.

The rubber domains are provided as a curative-containing elastomer (e.g. curative-containing brominated copolymer of isobutylene and p-methylstyrene). Such rubber is then blended with the thermoplastic polymer in a high shear mixing operation to form a thermoplastic elastomer composition in a form of a continuous phase thermoplastic polymer matrix which contains a discontinuous elastomer (rubber) dispersion therein.

The rubber domains become cured within the thermoplastic polymer matrix during a high shear mixing thereof at an elevated temperature sufficient to at least partially cure the rubber domains with a suitable curative contained in the rubber itself such as, for example, sulfur-containing curative. Sometimes, such composite might be referred to as being dynamically cured in a sense being a dynamically vulcanized alloy in which the dispersed rubber domains become at least partially cured (vulcanized) within the thermoplastic polymer matrix.

The continuous thermoplastic polymer phase of the thermoplastic elastomer composite contemplated for use in this invention comprise at least one of Nylon 6, Nylon 66, Nylon 6/66, Nylon 610 and Nylon 11, preferably Nylon 6/66, Nylon 6 or Nylon 66.

In practice, Nylon 6 may be envisioned as being a polycaprolactam.

In practice, Nylon 66 may be envisioned as being poly(hexamethylene adipamide) as a copolymer of hexamethylene diamine and adipic acid.

In practice, Nylon 6/66 may be envisioned as being a terpolymer of hexamethylene diamine, adipic acid and caprolactam.

It is preferred that such thermoplastic polyamides have a softening point in a range of from 170°C to 220°C.

Representative of such film composite, which might sometimes be referred to as being a "DVA" film, is, for example, composed of a nylon 6/66 continuous thermoplastic polymer phase which contains a dispersion of cured rubber domains comprised of brominated copolymer of isobutylene and p-methylstyrene. Such film composition might, for example, be referred to as a dynamically vulcanized alloy obtainable from ExxonMobil.

In practice, the DVA film may, for example, be a DVA film composite in a form of a pre-formed unitary continuous hoop (unitary and continuous in a sense of not having a seam of overlapped ends) which is positioned onto a tire building drum. If the film has a thin bonding layer on one of its surfaces, the bonding layer would be on a surface of the film which faces away from the building drum (not touching the building drum). The remainder of the tire assembly, or components, are then built over the initially applied pre-formed unitary, seamless DVA film hoop on the building drum. Such method of tire making is described, for example, by D.S. Tracey and A.H. Tson in Rubber World Magazine, September 2007, on Page 17.

In practice, the seamless DVA film hoop may be manufactured, for example, by well known film blowing methods to form a seamless cylindrical tube of the thermoplastic elastomer composite. Cross-sections of the cylindrical tube are cut to form seamless cylindrical hoops of the film having the diameter of the cylindrical tube from which they are cut.

A significant disadvantage can readily be seen in the sense that it becomes necessary to maintain a special inventory of such cylindrical hoops of various diameters to accommodate a variety of tire sizes, particularly since it is often desired for the film hoop to fit the inner surface of an uncured tire to which the film hoop is applied rather exactly to accommodate the tire building process. It is considered that ill fitting hoops would have to be scrapped.

In practice, it might be thought of to simply apply a sheet of the thermoplastic elastomer film to onto a building drum with the film ends overlapping each and proceed to build the remainder of the tire components in a manner similar to application of a sheet of a tacky (building tack surfaced) rubber innerliner layer for building the tire.

In such existing practice, care is to be taken not to pre-heat overlapped portion of the tacky (building tack surfaced) sheet of rubber inner liner layer because it would then have an unwanted heat history and pre-cure variation, prior to vulcanization of the tire at an elevated temperature.

Application of the thermoplastic elastomer DVA film to the tire building drum at room temperature, in a fashion similar to the aforesaid application of a rubber inner liner layer instead of the DVA film, whether or not the DVA film contains a rubber bonding layer thereon, is not envisioned as being a logical or suitable option because of, for example, the difficulty in adhering, or securing, the film, with its lack of building tack, to the uncured rubber tire components.

It is also considered herein would not be logical, in view of the aforesaid more normal rubber tire innerliner application in a tire building process, to apply the thermoplastic elastomer (DVA film) with an initial heat history to the uncured rubber components.

Accordingly, this invention is considered herein to be a significant discovery in light of such past practice.

In practice, the DVA film itself typically has little surface building tack (tacky surface to promote lightly adhering to an uncured rubber surface which might be referred to as rubber-building tack) so it is not seen herein that a flat film of DVA (film not in a continuous hoop form) could readily be formed into individual hoops of various desired diameters by simply forming designed hoops (hoop of designed, pre-determined or fitted hoop diameter) of the film with ends overlapping at room temperature and relying on (non-existing) surface building tack to hold the film together without application of an adhesive (e.g. pressure sensitive adhesive) to a surface of the film.

For this invention, for a tire building process, it has been discovered that the overlapping ends of a DVA sheet can be adhered together in an overlapped configuration to form an annular hoop thereof by heat sealing its overlapping ends together to form a seam-containing hoop. While the idea, once conceived, seems of relatively simple nature, it goes against conventional wisdom in the tire manufacturing process because, in one aspect, it adds a "thought to be unwanted" pre-heat history to tire building process prior to the vulcanization of the tire. In such manner, then, it has been discovered that a DVA annular hoop can be formed of a desired diameter and applied as a tire innerliner layer as a part of a tire building process.

While the heat sealing process may not be completely understood, it is envisioned that the overlapped ends of the DVA film become heat sealed together to form a durable seam by a possible interfacial co-curing of discontinuous cured rubber domains (which contain a curative which may not be completely reacted in the DVA film formation) on the surface of one film surface against such domains on the other overlapped surface of the film and/or a degree of coalescing of the continuous thermoplastic phase at the interface between the overlapped ends of the DVA film.

As discussed, in tire manufacturing processes, various uncured rubber components for the tire are conventionally spliced together without a heating step being applied to the splice (therefore eliminating such heat history to the tire innerliner) because of concerns that a premature vulcanization may occur.

As discussed, in order to facilitate such splicing, the uncured rubber components are provided with a tacky surface (namely, building tack for adhering to an uncured rubber surface) and are joined at their splice by simply stitching (applying pressure at the splice) with a roller, without adding heat history to the splice.

It is to be therefore emphasized that it is considered that heat sealing overlapping ends
of DVA film together to form a seam-containing hoop for a tire innerliner component of a tire before its vulcanization at an elevated temperature is novel and of a significant discovery.

In the description of this invention, the term "phr" where used herein, and according to conventional practice, refers to "parts of a respective material per 100 parts by weight of rubber, or elastomer". The terms "rubber" and "elastomer" where used herein, may be used interchangeably, unless otherwise prescribed.

### Summary and Practice of the Invention

In accordance with this invention, a pneumatic tire according to claim 1 is provided.

Preferably, the tire contains an innerliner film layer wherein said film layer comprises a dynamically vulcanized alloy comprising a thermoplastic continuous phase containing a dispersion of discontinuous cured rubber domains, wherein said innerliner film layer comprises a seamed hoop of said film and wherein said seam comprises heat sealed overlapped ends of said film.

In practice, said innerliner film layer is desirably positioned in a form of a seamed hoop (thereby in a centrifugal configuration in the tire) with its opposite ends meeting in an overlapped condition to form said seam.

In practice, the preferably dynamically vulcanized alloy is prepared by, and is the product of, blending a thermoplastic polymer (or polymers) under a high shear condition at an elevated temperature sufficient to at least partially cure a dispersion of an elastomer within said thermoplastic polymer wherein said thermoplastic polymer is the continuous phase and said cured elastomer particles constitute a dispersed phase, wherein said elastomer, for example, comprises a halogenated (e.g. brominated) copolymer of isobutylene and p-methylstyrene, wherein said thermoplastic polymer comprises, for example, a polyamide preferably comprising at least one of Nylon 6, Nylon 66 and Nylon 6/66, and wherein said polyamide preferably has a softening point in a range of from 170°C to 220°C.

Accordingly, said film-based hoop for this invention contains a seam comprising said heat sealed overlapped ends of said film.

Said heat sealing of said overlapped portion of said film may be accomplished by various means such as, for example, by application of heat (elevated temperature) which can be accomplished by, for example, hot press (e.g. under pressure with the film positioned between platens), hot air blower (e.g. heated air gun directed to the overlapped portion of the film), ultrasonic welding (applied to the overlapped portion of the film), laser beam or microwave heating.

Such heat sealing of the overlapped film portion to form a seam-containing hoop may be accomplished, for example, prior to application of the hoop to a tire building process (e.g. prior to fitting the hoop onto a tire building drum or prior to application of the hoop to an inner surface of a tire rubber carcass) or, alternatively, subsequent to application of the film to a tire building drum (so the film may be fitted, or sized, directly to the tire building drum).

In an embodiment of the invention, building a tire (pneumatic tire) which comprises providing a film layer on a tire building drum in a form of a hoop thereof with an overlapping end portion comprised of overlapping ends thereof heat sealed together to form a seam followed by building tire rubber components onto the building drum over said film layer to form an assembly thereof and vulcanizing the assembly in a suitable mold at an elevated temperature to form a pneumatic tire, wherein said film layer comprises a dynamically vulcanized alloy comprising a thermoplastic elastomer continuous phase containing a dispersion of discontinuous cured rubber domains, wherein said dynamically vulcanized alloy is the product of blending of at least one thermoplastic polymer under a high shear condition at an elevated temperature sufficient to at least partially cure a dispersion of elastomer particles within said thermoplastic polymer, wherein said thermoplastic polymer is the continuous phase and said cured elastomer particles constitute a dispersed phase, wherein said elastomer comprises a brominated copolymer of isobutylene and p-methylstyrene, and wherein said thermoplastic polymer comprises at least one polyamide comprising at least one of Nylon 6, Nylon 66 and Nylon 6/66.

In one embodiment, said heat sealing of said overlapped portion of said film is by a means comprising application of heat, which can be accomplished by, for example, hot press or hot air blower or ultrasonic welding or laser beam or by microwave heating.

In one embodiment, said process comprises applying a butyl rubber (e.g. bromobutyl rubber) based tire innerliner layer onto a tire building drum, applying said film hoop with its overlapping ends heat sealed together to form a seam onto said butyl rubber based tire innerliner layer, followed by building tire components onto the building drum over said film layer to form an assembly thereof and vulcanizing the assembly in a suitable mold at an elevated temperature to form a pneumatic tire.

In one embodiment said process comprises applying said film layer onto a tire building drum to form a hoop thereof and heat sealing its overlapping ends together to form a seam followed by building tire rubber components onto the building drum over said film layer to form an assembly thereof and vulcanizing the assembly in a suitable mold at an elevated temperature of form a pneumatic tire.

In one embodiment, said process comprises forming a hoop of said film with an overlapping end portion, heat sealing said overlapping end portion to form a seam and applying said hoop onto a tire building drum followed by building tire rubber components onto the building drum over said film layer to form an assembly thereof and vulcanizing the assembly in a suitable mold at an elevated temperature to form a pneumatic tire.

In one embodiment, said process is provided wherein the overlapping portion of said film contains a rubber layer therebetween.

In another embodiment of the invention, said film layer contains a rubber-bonding layer (bonding layer for bonding the film to an unsaturated elastomer based rubber composition such as a tire carcass ply component to be built over the film layer) on one of its surfaces wherein, for said overlapping portion of said film, one film surface is positioned against said bonding layer surface of said film.

In said process of building said tire, the surface of said film layer which contains said bonding layer faces away from and thereby does not touch the building drum.

In practice, said dynamically vulcanized thermoplastic elastomer tire innerliner layer may have a thickness ranging from 0.025 mm to 1 mm depending somewhat upon the nature of the pneumatic tire and its intended use.

If desired, said thermoplastic polymer may contain a plasticizer to aid in its processing such as, for example, N-butylbenzene sulfonamide.

A significant aspect of the invention is the heat sealing of the overlapping portions or ends of the film together to form a seam-containing hoop thereof which is considered herein to be a significant departure from past practice of utilization of pre-formed seamless hoops of the film for the preparation of a tire innerliner.

### Brief Description of the Drawings

Drawings are provided to present a further understanding of the invention. For the Drawings, Figures 1 through 4 (FIG 1, FIG 2A, FIB 2B, FIG 3, and FIG 4) are provided.

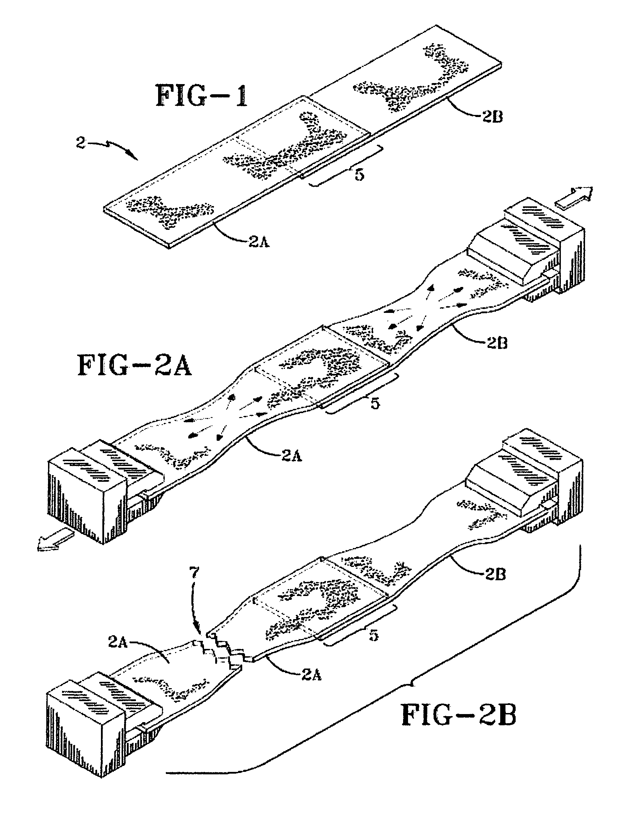

FIG 1, FIG 2A and FIG 2B depict two DVA film strips with their ends overlapped and heat sealed together.

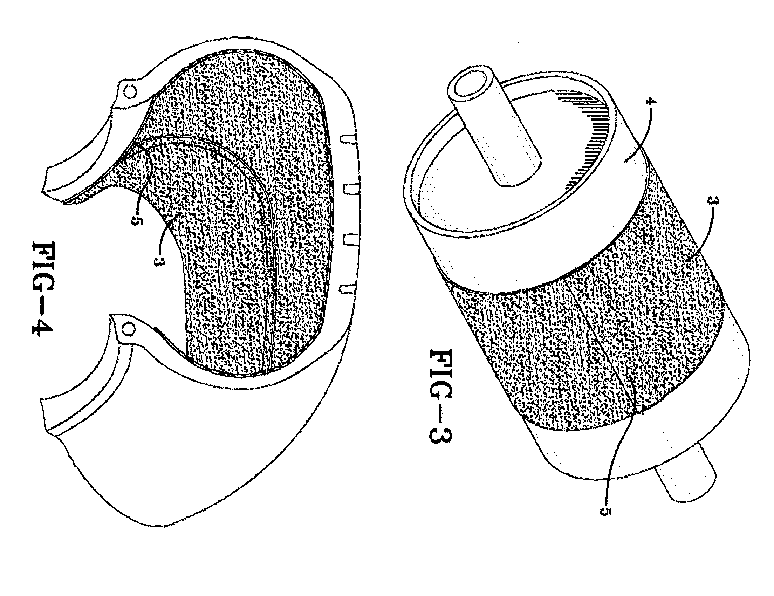

FIG 3 depicts an application of a DVA film to a tire building drum to form a hoop thereof of DVA film with its overlapping ends heat sealed together.
FIG 4 depicts a section of a tire with a hoop of DVA film on its inner surface with its overlapping ends heat sealed together.

### The Drawings

In FIG 1, a composite 2 is shown comprising two rectangular strips 2A and 2B of DVA film having their ends overlapped to form an overlapped portion 5.

The DVA film comprises a discontinuous at least partially cured elastomer phase (thereby containing a residual curative content in the discontinuous phase rubber) and a continuous thermoplastic phase.

The DVA film strips 2A and 2B are heat sealed together to form the composite 2 thereof in their overlapped portion 5 by application of heat (elevated temperature) to cause the two phases to coalesce together and/or cause the said cured discontinuous phases of the film to co-cure together at the interface of the contacting film surfaces and unlike conventional sulfur vulcanization, did not affect the subsequent adhesion to rubber compounds as shown by the building of the tire and subsequent testing of the tire.

The discontinuous elastomer phase for this drawing is envisioned as comprising cured brominated copolymer of isobutylene and p-methylstyrene, said copolymer as EXXPRO™ from ExxonMobil.

The continuous polymer phase for this drawing is envisioned as comprising Nylon 6/66.

Each of the DVA films strips 2A and 2B individually have dimensions of 1 inch (2.54 cm) by 3 inches (7.6 cm) are joined by having their ends overlapped to form the overlapped portion 5 having a dimension of 1 inch (2.54 cm) in length.

In FIG 2, the composite 2 of the heat sealed DVA strips 2A and 2B are submitted to attempt to pull them apart using an Instron™ test instrument to evaluate the strength of the bond of the heat sealed DVA strips in the overlapped portion 5.

In FIG 2 it seen that the composite 2 is stretched to the extent that the individual DVA strips are lengthened and narrowed.

In FIG 2B it is seen that the composite 2 broke at position 7 which is outside the overlapped portion 5 which therefore demonstrates that heat sealing of the overlapped DVA strips 2A and 2B together created a bond which is stronger than the individual DVA strips 2A and 2B and, further, is satisfactory for a purpose of building the tire. Subsequently, for a prepared tire, the overlapped portion of the DVA film survived without breaking. One side of the DVA film was coated with a thin coat of a bonding agent for bonding the film to an unsaturated rubber-containing tire carcass ply. Results were consistent whether the bonding agent coated side of the DVA film overlapped the film side of the DVA film or the film sides (without the presence of the bonding agent coating) of the DVA film overlapped each other.

In FIG 3, a tire building drum 4 is shown with a hoop of a DVA film 3 having been applied with its ends being overlapped to form an overlapped portion 5. Heat is applied to the overlapped portion 5 by an industrial grade heated air blower to heat seal the overlapped portion 5 by causing the DVA film to coalesce and thereby heat seal to itself to form a seam.

The following example is provided for a further understanding of the invention.

### EXAMPLE I - Evaluation of Heat Sealing

A sheet of film composed of a continuous thermoplastic Nylon matrix (e.g. Nylon 6/66) having a softening point within 170°C to 220°C, which contained a dispersion of at least partially cured rubber particle domains (comprised of cured brominated copolymer of isobutylene and p-methylstyrene and curative for said copolymer), (the film composite is referred to herein as a dynamically vulcanized alloy, or "DVA") was cut into rectangular strips to evaluate whether their ends may be suitably overlapped and heat sealed together to form a pneumatic tire innerliner in a shape of an annular hoop in a similar manner depicted in FIG 2 herein.

Such evaluation was deemed appropriate since the DVA film surface did not have sufficient building tack for joining its overlapping ends together and that suitable surface building tack is considered herein as being essential for joining the overlapping ends of the DVA film together prior to heat sealing the overlapping film ends together.

For this example, the rectangular DVA film strips had a length of 3 inches (7.6 cm) and a width of 1 inch (2.5 cm).

An end of one rectangular DVA strip was positioned over the end of another of the rectangular DVA strip in an overlapping configuration in a manner similar to FIG 1 herein to form a composite thereof with a created overlapped portion, or segment, of the two DVA strips being 1 inch (2.5 cm) long.

The overlapped portion of the DVA film was placed in a hot press (under applied pressure between platens of a hot press) and the overlapping film portions pressed together at a temperature of 180°C to cause the overlapped portion of the film to coalesce and/or co-cure together at their interface and become heat sealed together (form a seam of the heat sealed composite).

The composite was pulled at room temperature (e.g. 23°C) by the Instron instrument at a crosshead speed of 508 mm/min in a manner depicted in FIG 2A.

The composite elongated and eventually broke in a manner depicted in FIG 2B at an elongation of 397 percent.

Accordingly, it is concluded herein that the overlapped ends of the DVA sample film were successfully heat sealed together in what is referred to herein as a splice, and, further, that such heat sealed splice would therefore be suitable for use as a component (tire innerliner) of a tire assembly without adding additional heat history to the tire assembly itself prior to vulcanization of the tire assembly.

The above experiment was repeated using an ultrasonic welder to heat seal the overlapped portion of the film together (by ultrasonic welding) and similar results were obtained.

The above experiment was repeated where an uncured thin sheet of rubber was applied between the overlapped portion of the samples and similar results were obtained.

### EXAMPLE II

A film (sheet form of the film) of DVA was wrapped around a tire building drum with its ends overlapped to form a composite hoop thereof in a manner depicted in FIG 3. The overlapped portion of the ends were heat sealed together on the tire building drum, using an industrial grade hot air gun (hot air blower), so that the film fitted in a form of a seam-containing hoop onto the tire building drum.

The remainder of the tire was assembled and built on the building drum with the prepared, seam-containing, fitted DVA hoop becoming the tire innerliner.

The resulting assembly was placed in a suitable mold and cured at an elevated temperature of 175°C to from a cured rubber tire with the heat sealed DVA film as its innerliner, of which a section of the tire is shown in FIG 4.

The resultant tire was successfully tested to evaluate the suitability of the pre-formed film hoop, including the stability of the heat sealed overlapped film seam of the overlapped film portions.

## Claims

1. A pneumatic tire comprising an innerliner film layer (3) wherein the innerliner film layer (3) comprises an alloy comprising a thermoplastic continuous phase containing a dispersion of discontinuous cured rubber domains and wherein the innerliner film layer (3) comprises a seamed hoop, the seam comprising heat sealed overlapping portions of the innerliner film layer (3).

2. The tire of claim 1 wherein the alloy is a dynamically vulcanized alloy.

3. The tire of claim 1 or 2 wherein the innerliner film layer (3) is positioned in a form of a seamed hoop with its opposite ends meeting in a heat sealed overlapping condition to form the seam.

4. The tire of at least one of the previous claims wherein the alloy is the product of blending of at least one thermoplastic polymer under a high shear condition at an elevated temperature sufficient to at least partially cure a dispersion of an elastomer particles within the thermoplastic polymer, wherein the thermoplastic polymer is the continuous phase and the cured elastomer particles constitute a dispersed phase, wherein the elastomer comprises a brominated copolymer of isobutylene and p-methylstyrene, and wherein the thermoplastic polymer comprises of at least one polyamide preferably comprising Nylon 6, Nylon 66 and/or Nylon 6/66.

5. The tire of at least one of the previous claims wherein the overlapping portions or ends of the innerliner film layer (3) comprise a rubber layer therebetween.

6. The tire of at least one of the previous claims wherein the at least one polyamide has a softening point in a range of from 170°C to 220°C.

7. The tire of at least one of the previous claims wherein the innerliner film layer (3) comprises a rubber-bonding layer on one of its surfaces and wherein, for the overlapping portion or end of the innerliner film layer (3), one innerliner film layer surface is positioned against the rubber-bonding layer surface.

8. The tire of at least one of the previous claims wherein the innerliner film layer (3) has a thickness ranging of from 0.025 mm to 1 mm, alternatively of from 0.1 mm to 0.5 mm.

9. The tire of at least one of the previous claims wherein the thermoplastic polymer comprises a plasticizer comprising N-butylbenzene sulfonamide.

10. A process of building a tire which comprises providing an innerliner film layer (3) in a form of a hoop with overlapping portions (5) or ends heat sealed together to form a seam onto a tire building drum (4) followed by building tire rubber components onto the building drum (4) over said film layer to form an assembly thereof and vulcanizing the assembly in a mold at an elevated temperature of form a pneumatic tire, wherein the innerliner film layer (3) comprises an alloy comprising a thermoplastic continuous phase containing a dispersion of discontinuous cured rubber domains.

11. The process of claim 10 wherein the film layer comprises a preferably dynamically vulcanized alloy comprising a thermoplastic elastomer continuous phase containing a dispersion of discontinuous cured rubber domains, wherein the alloy is the product of blending of at least one thermoplastic polymer under a high shear condition at an elevated temperature sufficient to at least partially cure a dispersion of an elastomer particles within the thermoplastic polymer, wherein the thermoplastic polymer is the continuous phase and the cured elastomer particles constitute a dispersed phase, wherein the elastomer comprises a brominated copolymer of isobutylene and p-methylstyrene, and wherein the thermoplastic polymer comprises of at least one polyamide preferably comprising Nylon 6, Nylon 66 and/or Nylon 6/66.

12. The process of claim 10 or 11 wherein the heat sealing of the overlapping portions or ends of the film layer is by a means comprising application of heat, by hot press, by hot air blower, by ultrasonic welding, by laser beam or by microwave heating.

13. The process of at least one of the claims 10 to 12 comprising applying a butyl rubber based tire innerliner layer onto a tire building drum (4), applying the film layer in the form the hoop (3) with its overlapping portions or ends heat sealed together to form the seam onto the butyl rubber based tire innerliner layer, followed by building tire components onto the building drum (4) over the film layer to form an assembly thereof, and vulcanizing the assembly in a mold at an elevated temperature of form a pneumatic tire.

14. The process of at least one of the claims 10 to 13 wherein the overlapping portions (5) or ends comprise a rubber layer therebetween.

15. The process of at least one of the claims 10 to 14 wherein the film layer comprises a rubber-bonding layer on one of its surfaces, wherein, for the overlapping portions or ends of the film layer, one film layer surface is positioned against the rubber-bonding layer surface of the film layer, and wherein the surface of the film layer which contains the rubber-bonding layer faces away from and thereby does not touch the building drum (4).

## Patentansprüche

1. Luftreifen, umfassend eine Innenisolierungs-Folienlage (3), wobei die Innenisolierungs-Folienlage (3) eine Legierung umfasst, die eine thermoplastische kontinuierliche Phase umfasst, die eine Dispersion diskontinuierlicher vulkanisierter Kautschukdomänen enthält, und wobei die Innenisolierungs-Folienlage (3) einen Reif mit Naht umfasst, wobei die Naht verschweißte, überlappende Teile der Innenisolierungs-Folienlage (3) umfasst.

2. Reifen nach Anspruch 1, wobei die Legierung eine dynamisch vulkanisierte Legierung ist.

3. Reifen nach Anspruch 1 oder 2, wobei die Innenisolierungs-Folienlage (3) in einer Form eines Reifs mit Naht positioniert ist, dessen entgegengesetzte Enden einander in einem verschweißten überlappenden Zustand treffen, um die Naht zu bilden.

4. Reifen nach mindestens einem der vorgenannten Ansprüche, wobei die Legierung das Produkt des Mischens mindestens eines thermoplastischen Polymers unter einer Hochscherkraftbedingung auf einer erhöhten Temperatur, die ausreicht, um eine Dispersion von Elastomerteilchen in dem thermoplastischen Polymer mindestens teilweise zu vulkanisieren, ist, wobei das thermoplastische Polymer die kontinuierliche Phase ist und die vulkanisierten Elastomerteilchen eine dispergierte Phase darstellen, wobei das Elastomer ein bromiertes Copolymer von Isobutylen und p-Methylstyrol umfasst und wobei das thermoplastische Polymer aus mindestens einem Polyamid besteht, das bevorzugt Nylon 6, Nylon 66 und/oder Nylon 6/66 umfasst.

5. Reifen nach mindestens einem der vorgenannten Ansprüche, wobei die überlappenden Teile oder Enden der Innenisolierungs-Folienlage (3) eine Kautschukschicht dazwischen umfassen.

6. Reifen nach mindestens einem der vorgenannten Ansprüche, wobei das mindestens eine Polyamid einen Erweichungspunkt in einem Bereich von 170°C bis 220 °C aufweist.

7. Reifen nach mindestens einem der vorgenannten Ansprüche, wobei die Innenisolierungs-Folienlage (3) eine Kautschukbindungslage an einer ihrer Oberflächen umfasst und wobei, für den überlappenden Teil oder Ende der Innenisolierungs-Folienlage (3), eine Innenisolierungs-Folienlagenoberfläche gegen die Kautschukbindungslagenoberfläche positioniert ist.

8. Reifen nach mindestens einem der vorgenannten Ansprüche, wobei die Innenisolierungs-Folienlage (3) eine Dicke hat, die sich auf 0,025 mm bis 1 mm beläuft, alternativ auf 0,1 mm bis 0,5 mm.

9. Reifen nach mindestens einem der vorgenannten Ansprüche, wobei das thermoplastische Polymer einen Weichmacher umfasst, der N-Butylbenzolsulfonamid umfasst.

10. Verfahren zum Aufbauen eines Reifens, welches das Anbringen einer Innenisolierungs-Folienlage (3) in Form eines Reifs mit überlappenden Teilen (5) oder Enden, die miteinander verschweißt sind, um eine Naht zu bilden, auf einer Reifenbautrommel (4) umfasst, gefolgt vom Aufbauen von Reifenkautschukbauteilen auf der Bautrommel (4) über besagter Folienlage, um eine Anordnung daraus zu bilden, und Vulkanisieren der Anordnung in einem Formwerkzeug auf einer erhöhten Temperatur, um einen Luftreifen zu bilden, wobei die Innenisolierungs-Folienlage (3) eine Legierung umfasst, die eine thermoplastische kontinuierliche Phase umfasst, die eine Dispersion diskontinuierlicher vulkanisierter Kautschukdomänen enthält.

11. Verfahren nach Anspruch 10, wobei die Folienlage eine bevorzugt dynamisch vulkanisierte Legierung umfasst, die eine thermoplastische kontinuierliche Elastomerphase umfasst, die eine Dispersion diskontinuierlicher vulkanisierter Kautschukdomänen enthält, wobei die Legierung das Produkt des Mischens mindestens eines thermoplastischen Polymers unter einer Hochscherkraftbedingung auf einer erhöhten Temperatur ist, die ausreicht, um eine Dispersion von Elastomerteilchen in dem thermoplastischen Polymer mindestens teilweise zu vulkanisieren, wobei das thermoplastische Polymer die kontinuierliche Phase ist und die vulkanisierten Elastomerteilchen eine dispergierte Phase darstellen, wobei das Elastomer ein bromiertes Copolymer von Isobutylen und p-Methylstyrol umfasst und wobei das thermoplastische Elastomer aus mindestens einem Polyamid besteht, das bevorzugt Nylon 6, Nylon 66 und/oder Nylon 6/66 umfasst.

12. Verfahren nach Anspruch 10 oder 11, wobei das Verschweißen der überlappenden Teile oder Enden der Folienlage durch ein Mittel stattfindet, das die Anwendung von Wärme, durch Heißpresse, durch Heißluftgebläse, durch Ultraschallschweißen, durch Laserstrahl oder Mikrowellenerhitzen umfasst.

13. Verfahren nach mindestens einem der Ansprüche 10 bis 12, umfassend das Anbringen einer Reifen-Innenisolierungslage auf Basis von Butylkautschuk auf einer Reifenbautrommel (4), Anbringen der Folienlage in Form des Reifs (3) mit dessen überlappenden Teilen oder Enden miteinander verschweißt, um die Naht zu bilden, auf der Reifen-Innenisolierungslage auf Basis von Butylkautschuk, gefolgt vom Aufbauen von Reifenbauteilen auf der Bautrommel (4) über der Folienlage, um eine Anordnung daraus zu bilden, und Vulkanisieren der Anordnung in einem Formwerkzeug auf einer erhöhten Temperatur, um einen Luftreifen zu bilden.

14. Verfahren nach mindestens einem der Ansprüche 10 bis 13, wobei die überlappenden Teile (5) oder Enden eine Kautschuklage dazwischen umfassen.

15. Verfahren nach mindestens einem der Ansprüche 10 bis 14, wobei die Folienlage eine Kautschukbindungslage an einer ihrer Oberflächen umfasst, wobei für die überlappenden Teile oder Enden der Folienlage eine Folienlagenoberfläche gegen die Kautschukbindungslagen-Oberfläche der Folienlage positioniert wird und wobei die Oberfläche der Folienlage, welche die Kautschukbindungslage enthält, von der Bautrommel (4) abgewendet ist und **dadurch** diese nicht berührt.

## Revendications

1. Bandage pneumatique comprenant un calandrage intérieur sous la forme d'une couche pelliculaire (3), le calandrage intérieur sous la forme d'une couche pelliculaire (3) comprenant un alliage comprenant une phase continue thermoplastique contenant une dispersion de domaines discontinus de caoutchouc vulcanisé et le calandrage intérieur sous la forme d'une couche pelliculaire (3) comprenant un cerceau soudé, la soudure comprenant des portions chevauchantes soumises à un thermosoudage, du calandrage intérieur sous la forme d'une couche pelliculaire (3).

2. Bandage pneumatique selon la revendication 1, dans lequel l'alliage est un alliage qui a été soumis à une vulcanisation dynamique.

3. Bandage pneumatique selon la revendication 1 ou 2, dans lequel le calandrage intérieur sous la forme d'une couche pelliculaire (3) est disposé sous la forme d'un cerceau soudé dont les extrémités opposées se rencontrent à l'état de chevauchement soumis à un thermosoudage pour former la soudure.

4. Bandage pneumatique selon au moins une des revendications précédentes, dans lequel l'alliage est le produit du mélange d'au moins un polymère thermoplastique dans des conditions de cisaillement élevé à une température élevée suffisante pour vulcaniser au moins en partie une dispersion de particules élastomères, le polymère thermoplastique représentant la phase continue et les particules d'élastomère vulcanisé constituant une phase dispersée, l'élastomère comprenant un copolymère bromé d'isobutylène et de p-méthylstyrène, et dans lequel le polymère thermoplastique comprend au moins un polyamide comprenant de préférence du nylon 6, du nylon 66 et/ou du nylon 6/66.

5. Bandage pneumatique selon au moins une des revendications précédentes, dans lequel les portions ou les extrémités chevauchantes du calandrage intérieur sous la forme d'une couche pelliculaire (3) comprennent une couche de caoutchouc entre elles.

6. Bandage pneumatique selon au moins une des revendications précédentes, dans lequel ledit au moins un polyamide possède un point de ramollissement dans la plage de 170 °C à 220 °C.

7. Bandage pneumatique selon au moins une des revendications précédentes, dans lequel le calandrage intérieur sous la forme d'une couche pelliculaire (3) comprend une couche de liage au caoutchouc sur une de ses surfaces, et dans lequel pour la portion ou l'extrémité chevauchante du calandrage intérieur sous la forme d'une couche pelliculaire (3), on positionne une surface du calandrage intérieur sous la forme d'une couche pelliculaire contre la surface de la couche de liage au caoutchouc.

8. Bandage pneumatique selon au moins une des revendications précédentes, dans lequel le calandrage intérieur sous la forme d'une couche pelliculaire (3) possède une épaisseur se situant dans la plage de 0,025 mm à 1 mm, en variante de 0,1 mm à 0,5 mm.

9. Bandage pneumatique selon au moins une des revendications précédentes, dans lequel le polymère thermoplastique comprend un plastifiant comprenant du n-butylbenzène sulfonamide.

10. Procédé de confection d'un bandage pneumatique, qui comprend le fait de procurer un calandrage intérieur sous la forme d'une couche pelliculaire (3) en lui conférant la forme d'un cerceau dont on applique fermement les portions 5 ou les extrémités chevauchantes l'une contre l'autre pour former une soudure sur le tambour (4) de confection du bandage pneumatique, avant de placer les composants de caoutchouc du bandage pneumatique sur le tambour (4) de confection par-dessus ladite couche pelliculaire pour obtenir un assemblage et en organisant ensuite l'assemblage dans un moule à une température élevée pour obtenir un bandage pneumatique, le calandrage intérieur sous la forme d'une couche pelliculaire (3) comprenant un alliage comprenant une phase continue thermoplastique contenant une dispersion de domaines discontinus de caoutchouc vulcanisé.

11. Procédé selon la revendication 10, dans lequel la couche pelliculaire comprend un alliage de préférence soumis à une vulcanisation dynamique comprenant une phase continue élastomère thermoplastique contenant une dispersion de domaines discontinus du caoutchouc vulcanisé, l'alliage étant le produit de mélanges d'au moins un polymère thermoplastique dans des conditions de cisaillement élevé à une température élevée suffisante pour vulcaniser au moins en partie une dispersion des particules élastomères au sein du polymère thermoplastique, le polymère thermoplastique représentant la phase continue et les particules élastomères vulcanisées constituant une phase dispersée, l'élastomère comprenant un copolymère bromé d'isobutylène et de p-méthylstyrène, et le polymère thermoplastique comprenant au moins un polyamide comprenant de préférence du nylon 6, du nylon 66 et/ou du nylon 6/66.

12. Procédé selon la revendication 10 ou 11, dans lequel le thermosoudage des portions ou des extrémités chevauchantes de la couche pelliculaire s'effectue via un moyen comprenant une application de chaleur, via une presse à chaud, via un ventilateur d'air chaud, via une soudure par ultrasons, via un faisceau laser ou via un chauffage par micro-ondes.

13. Procédé selon au moins une des revendications 10 à 12, comprenant le fait d'appliquer une couche faisant office de calandrage intérieur d'un bandage pneumatique, à base de caoutchouc butyle sur un tambour (4) de confection de bandage pneumatique, le fait d'appliquer la couche pelliculaire sous la forme d'un cerceau (3) en amenant l'une contre l'autre ses portions ou ses extrémités chevauchantes par thermosoudage pour obtenir la soudure sur la couche faisant office de calandrage intérieur d'un bandage pneumatique, à base de caoutchouc butyle, avant d'appliquer les composants du bandage pneumatique sur le tambour de confection (4) par-dessus la couche pelliculaire pour obtenir un assemblage et avant de vulcaniser l'assemblage dans un moule à une température élevée pour obtenir un bandage pneumatique.

14. Procédé selon au moins une des revendications 10 à 13, dans lequel les portions ou les extrémités chevauchantes (5) comprennent une couche de caoutchouc entre elles.

15. Procédé selon au moins une des revendications 10 à 14, dans lequel la couche pelliculaire comprend une couche de liage au caoutchouc sur une de ses surfaces, dans lequel, pour la portion ou l'extrémité chevauchante du calandrage intérieur sous la forme d'une couche pelliculaire (3), on positionne une surface du calandrage intérieur sous la forme d'une couche pelliculaire contre la surface de la couche de liage au caoutchouc, et dans lequel la surface de la couche pelliculaire qui contient la couche de liage au caoutchouc se détournant du tambour de confection (4) et par conséquent ne touche pas ce dernier.
